(19) Europäisches Patentamt

European Patent Office

Office européen des brevets

(11) Veröffentlichungsnummer: **0 253 164**
A1

# (12) EUROPÄISCHE PATENTANMELDUNG

(21) Anmeldenummer: 87109054.4

(22) Anmeldetag: 24.06.87

(51) Int. Cl.⁴: **B27K 3/50** , B27K 3/52

(30) Priorität: 26.06.86 DE 3621360

(43) Veröffentlichungstag der Anmeldung:
20.01.88 Patentblatt 88/03

(84) Benannte Vertragsstaaten:
AT BE CH DE ES FR GB GR IT LI NL SE

(71) Anmelder: Dr. Wolman GmbH
Postfach 11 60
D-7573 Sinzheim(DE)

(72) Erfinder: Klein, Werner
Eyersheimer Strasse 34
D-6701 Birkenheide(DE)
Erfinder: Marx, Hans-Norbert
Mozartweg 8
D-7580 Buehl-Weitenung(DE)
Erfinder: Goettsche, Reimer, Dr.
Waldstrasse 27
D-7570 Baden-Baden(DE)

(74) Vertreter: Mutzbauer, Helmut, Dr. et al
Carl-Bosch-Strasse 38
D-6700 Ludwigshafen(DE)

(54) Holzschutzmittel.

(57) Holzschutzmittel enthaltend Lösungsmittel, Alkydharz, quartäres Ammoniumsalz und Eisensalz und Verfahren zum Schutz von Holz mit diesem Mittel.

EP 0 253 164 A1

## Holzschutzmittel

Die vorliegende Erfindung betrifft ein Holzschutzmittel, das ein Lösungsmittel, ein Alkydharz und ein Eisensalz (Eisentrockner) zusammen mit einer quartären Ammonium-Verbindung enthält.

Die Verwendung von quartären Ammoniumverbindungen in Holzschutzmitteln ist bekannt (Seifen-Öle-Fette-Wachse 109. Jahrgang Nr. 20, 1983, S. 603-606). Neben der Verwendung in wasserlöslichen Holzschutzmitteln können sie auch in lösungsmittelhaltigen (organische Lösungsmittel) Holzschutzmitteln verwendet werden. Bei lösungsmittelhaltigen Holzschutzmitteln mit Alkydharzen als Bindemittel, z.B. in Grundierungen, Lasuren, ergibt sich der Nachteil, daß die quartären Ammoniumverbindungen die Trocknung oxydativ trockener Bindemittel (z.B. Leinöl) negativ beeinflussen. Auch bei Verwendung der üblichen Metalltrockner auf Basis Mangan, Blei oder Cobaltmischtrocknern wird die Trocknung nicht wesentlich verbessert. Bei Verwendung von Einmetall-Cobalt-Trocknern verfärbt sich bei der für die Trocknung notwendigen Trocknerdosierung das Holzschutzmittel stark blau und verfärbt das damit behandelte Holz. Cobalt-Einmetall-Trockner und auch Cobalt-Mischtrockner sind toxikologisch bedenklich, wenn sie in atembarer Form vorliegen. Dies ist der Fall beim Spritzen von Holz mit entsprechend ausgerüsteten Holzschutzmitteln, aber auch beim Abschleifen damit behandelten Holzes. Eisentrockner werden gewöhnlich nur in Verbindung mit Cobalt-, Blei-oder Mangan-trocknern eingesetzt (Römpp, Chemie-Lexikon 1977, Stichwort Trockenstoffe).

Es wurde jetzt gefunden, daß obengenannte Nachteile nicht eintreten bei lösungsmittelhaltigen Holzschutzmitteln mit quartären Ammoniumverbindungen und Alkydharz in Mischung mit einem Eisensalz. Ein Eisensalz (Eisentrockner, Eisensikkativ) ist z.B. ein Eisensalz einer natürlichen oder synthetischen Carbonsäure, z.B. Linoleat, Resinat, Salz einer Harzsäure (z.B. des Kollophoniums), Naphthenat, Oktoat und Salze anderer synthetischer, aliphatischer Carbonsäuren.

Es sind auch Mischungen mit anderen cobaltfreien Trocknern möglich, z.B. Trocknern auf Basis Mangan, Blei, Zirkonium.

Eine quartäre Ammoniumverbindung ist z.B. eine Verbindung entsprechend der allgemeinen Formel $(R^1R^2R^3R^4N)^+Z^-$, wobei
$R^1$ einen Alkylrest mit 8 bis 20 Kohlenstoffatomen, insbesondere einen Alkylrest mit 12 bis 20 Kohlenstoffatomen oder einen Benzylrest bedeutet, der gegebenenfalls durch $C_1$-bis $C_{20}$-Alkyl oder Halogen substituiert ist.
$R^2$ $C_1$-bis $C_6$-Alkyl, $C_3$-bis $C_9$-Alkoxyalkyl
$R^3$ $C_1$-bis $C_6$-Alkyl, $C_1$-bis $C_4$-Alkoxy,

$R^4$ $C_1$-bis $C_{20}$-Alkyl
bedeuten oder je zwei der Reste $R^1$ bis $R^4$ zusammen mit dem Stickstoffatom einen heterocyclischen Rest bilden, der 4 bis 5 Atome, 1 bis 2 N-Atome und eine, zwei oder drei Doppelbindungen enthält, wobei die Kohlenstoffatome gegebenenfalls durch $C_1$-bis $C_4$-Alkyl oder Halogen substituiert sind, und Z einen Säurerest bedeutet.

Ein organisches Lösungsmittel ist beispielsweise ein Kohlenwasserstoff (aromatischer oder aliphatischer Kohlenwasserstoff oder deren Mischung), insbesondere ein Kohlenwasserstoff mit dem Siedebereich von 160 bis 240°C, z.B. 180 bis 220°C. Eine Mischung aliphatischer Kohlenwasserstoffe mit dem Siedebereich 180 bis 220°C hat sich gut bewährt.

Ein Alkydharz ist beispielsweise ein Polyester aus mehrwertigen Alkoholen und Polycarbonsäuren. Polycarbonsäuren sind z.B. Phthalsäure, Terephthalsäure, Maleinsäure, Fumarsäure. Mehrwertige Alhohole sind z.B. Glycerin, Glykol, Pentaerythrit. Zusätzlich enthalten die Alkydharze noch Öle oder Fettsäuren z.B. Leinöl, Sojaöl, Kokosfettsäure, synthetische Fettsäuren, Alkydharze mit mehr als 60 % (Gew.-%) Ölanteil werden als langölige Alkydharze bezeichnet.

Geeignete Mischungen enthalten beispielsweise (jeweils Gew.-%)
0,5 bis 10 % quartäre Ammoniumverbindung
3 bis 30 % Alkydharz
0,006 bis 0,35 % Eisensalz (Eisentrockner)
(Eisengehalt in der Mischung 0,005 bis 0,25 %)
Rest bis zu 100 % organisches Lösungsmittel (Kohlenwasserstoff).

Zur Vergrößerung des Wirkungsspektrums oder zur Erzielung besonderer Effekte können neben den quartären Ammoniumverbindungen auch andere Wirkstoffe, z.B. insektizide oder fungizide Wirkstoffe enthalten sein. Als besonders geeignet sind z.B. Mischungen mit folgenden Verbindungen anzusehen:
N-Tridecyl-2,6-dimethylmorpholin
Organozinnverbindungen, wie Tributylzinnoxid und Tributylzinnbenzoat
Tributylzinn-N-Cyclohexyl-N′-hydrodiazeniumoxid
Methylenbisthiocyanat
Dimethylalkylaminsalze
Chlorierte Phenole, wie Tetra-und Pentachlorphenol
Tetrachlorisophthalsäure-dinitril
N-Cyclohexyl-N-methoxy-2,5-dimethyl-furan-3-carbonsäureamid
N-Diemthyl-N′-phenyl-(N-fluormethylthio)-sulfamid
N,N-Dimethyl-N′-tolyl-(N-fluormethylthio)-sulfamid
Benzimidazol-2-carbaminsäure-methylester
2-Thiocyanomethyl-thiobenzothiazol

Kupfernaphthenat
Kupfer-8-oxychinolin
2-Jodbenzoesäureanilid
Alkali-und Metallsalze des N'Hydroxy-N-cyclohexyl-diazeniumoxids
1-(1',2',4'-Triazolyl-1')-(1-(4'-chlorphenoxy))-3,3-dimethylbutan-2-on
1-(1',2',4'-Triazolyl-1')-(1-(4'-chlorphenoxy))-3,3-dimethylbutan-2-ol
N-(3-(p-tert.-Butylphenyl)-2-methyl-propyl)-cis-2,6-dimethylmorpholin
Hexachlorcyclohexan
O,O-Diethyl-o-(a-cyanbenzyliden-amino)-thiophosphat
O,O-Diethyl-o-3,5,6-trichlor-2-pyridil-thiono-phosphat
O,O-Diethyl-dithio-phosphoryl-methyl-6-chlorbenoxazolon
2-(1,3-Thiazol-4-yl)-benzimidazol
N-Trichlormethylthio-3,6,7,8-tetrahydrophthalimid
N-(1,1,2,2-Tetrachlorethylthio)-3,6,7,8-tetrahydrophthalimid
N-Trichlormethylthiophthalimid
2-N-Octyl-4-Isothiazolin-3-on
1,2-Benzisothiazolon-3
1-(4-Chlorphenoxy)3,3-dimethyl-1-(1H-1,2,4-triazol-1-yl)-butan-2-on
1-(4-Chlorphenoxy)3,3-dimethyl-1-(1H-1,2,3-triazol-2-yl)-butan-2-ol
O,O-Diemthyl-S-(2-methylamino-2-oxoethyl)-dithiophosphat
O,O-Diethyl-O-(3,5,6-trichlor-2-pyridyl)-thiophosphat
O,O-Dimethyl-S-(N-phthalimido)-methyldithiophosphat
O,O,-Diethyl-O-(alpha-cyanbenzyliden-amino)-thiophosphat
6,7,8,9,10-Hexachlor-1,5,5a,6,9,9a-hexahydro-6,9-methano-2,3,4-benzodioxothiepien-3-oxid
2-sek.-Butyl-phenyl-N-methylcarbamat
2-i-propoxyphenyl-N-methyl-carbamat
N-Methyl-1-naphthyl-carbamat
Norbornen-dimethanohexa-chlorcyclosulfit
1-(4-Chorphenyl)-3-(2,6-di-fluorbenzoyl)-harnstoff
Synthetische Pyrethroide, wie
(+)-3-(2,2-Dichlorvinyl-2,2-dimethyl)-cyclopropan-1-carbonsäure-3-phenoxybenzylester
3-(2,2-Dichlorvinyl-2,2-dimethyl)-cyclopropan-1-carbonsäure-alpha-cyano-3-3-phenoxybenzylester
3-(2,2-Dibromvinyl-2,2-dimethyl)-alpha-cyano-m-phenoxybenzyl-1R,3R)-cyclopropan-carboxylat
alpha-Cyano-3-phenoxybenzyl-isopropyl-2,4-chlorphenylacetat.

Die neuen Holzschutzmittel erhalten im allgemeinen in der anwendungsfertigen Formulierung 0,5 bis 10,0 % quartäre Ammoniumverbindungen.

Je nach Typ des Holzschutzmittels kann z.B. enthalten sein
in einer Grundierung 3 bis 10 % Alkydharz
in einer Lasur 10 bis 25 % Alkydharz.

Je nach Gehalt an quartären Ammoniumverbindungen und Alkydharz kann in Holzschutzmittel soviel Eisentrockner verwendet werden, daß in der anwendungsfertigen Formulierung ein Eisengehalt von 0,005 bis 0,25 % vorliegt.

Zusätzlich können lösungsmittellösliche Farbstoffe oder Pigmentzubereitungen zugesetzt werden, es können auch wasserabweisende Mittel, z.B. Wachse oder Mittel zur Verhinderung der Hautbildung in dem Holzschutzmittel enthalten sein. Bekanntlich besteht bei Luftzutritt zu dem Holzschutzmittel (z.B. beim Öffnen des Behälters, in dem sich das Holzschutzmittel befindet) die Gefahr, daß ein Teil des organischen Lösungsmittels verdunstet und sich auf der Oberfläche des Holzschutzmittels eine Haut bildet.

Die Erfindung wird an folgenden Beispielen erläutert:
Für die Versuche wurde die folgende Standardrezeptur einer Lasur verwendet
16 % langöliges Alkydharz auf Basis Sojaöl/Leinöl, mit Pentaerythrit verestert
0,2 % Methylethylketoxim (Mittel zur Verhinderung der Hautbildung)
ad 100 % aliphatisches Lösungsmittel mit Siedebereich 180 bis 220°C Flammpunkt über 55°C

Die verschiedenen Formulierungen wurden auf einer Glasplatte aufgestrichen und das Trocknungsverhalten nach 6, 10, 14 und 24 Stunden beurteilt. Die Schichtdicke betrug 60 μ.

Als quartäre Ammoniumverbindung wurde ein Benzalkoniumchlorid
(Alkyldimethylbenzylammoniumchlorid ($C_{12}$ ca. 40 %, $C_{14}$ ca. 50 %, $C_{16}$ ca. 10 %) verwendet.

Als Trockner wurden handelsübliche Trockner, d.h. Naphthenate oder Octoate der verschiedenen Metalle verwendet.

| Trockner Metall | Metallgehalt | | Quartäre Ammoniumverbindung | Klebverhalten nach | | | |
|---|---|---|---|---|---|---|---|
| | | | | 6h | 10 | 14h | 24h |
| Mangan | 0,06 % | Mn | – | 0 | | | |
| Mangan | 0,06 % | Mn | 2 % | 3 | 3 | 3 | 3 |
| Kobalt | 0,0075 % | Co | | | | | |
| Blei | 0,11 % | Pb | – | 3 | 2 | 1 | 0 |
| Mangan | 0,0075 % | Mn | | | | | |
| Kobalt | 0,0075 % | Co | | | | | |
| Blei | | | 2 % | 3 | 3 | 3 | 3 |
| Mangan | 0,0075 % | Mn | | | | | |
| Kobalt | 0,015 % | Co | | | | | |
| Blei | 0,22 % | Pb | 2 % | 3 | 3 | 3 | 1 |
| Mangan | 0,015 % | Mn | | | | | |
| Blei | 0,25 % | Pb | – | 3 | 3 | 3 | 3 |
| Blei | 0,25 % | Pb | 2 % | 3 | 3 | 3 | 3 |
| Zirkonium | 0,18 % | Zr | 2 % | 3 | 3 | 3 | 3 |
| Zirkonium | 0,18 % | Zr | – | 3 | 3 | 3 | 3 |
| Kobalt | 0,03 % | Co | – | 0 | | | |
| Zirkonium | 0,045 % | Zr | | | | | |
| Kobalt | 0,03 % | Co | 2 % | 3 | 3 | 3 | 3 |
| Zirkonium | 0,045 % | Zr | | | | | |
| Kobalt | 0,06 % | Co | 2 % | 3 | 2 | 1 | 0 |
| Zirkonium | 0,09 % | Zr | | | | | |
| Eisen | 0,06 % | Fe | – | 3 | 3 | 3 | 3 |
| Eisen | 0,12 % | Fe | – | 3 | 3 | 3 | 3 |
| Eisen | 0,06 % | Fe | 2 % | 3 | 1 | 0 | |
| Eisen | 0,09 % | Fe | 2 % | 3 | 1 | 0 | |
| Eisen | 0,12 % | Fe | 2 % | 3 | 1 | 0 | |
| Eisen* | 0,09 % | Fe | 2 % | 3 | 1 | 0 | |
| Eisen** | 0,06 % | Fe | – | 3 | 3 | 3 | 3 |
| Eisen** | 0,06 % | Fe | 2 % | 2 | 1 | 0 | |
| Eisen*** | 0,09 % | Fe | – | 3 | 3 | 3 | 3 |
| Eisen*** | 0,09 % | Fe | 2 % | 3 | 2 | 1 | 0 |

Einstufungskriterien:

0    klebt nicht, in Ordnung

1    klebt schwach

2    klebt mittel

3    klebt stark

Bindemittel:

\*        24 % langöliges Alkydharz auf Basis Sojaöl/Leinöl, mit Penta-
         erythrit verestert

\*\*       16 % Langölalkydharz auf Basis pflanzlicher Fettsäuren

\*\*\*      24 % Langölalkydharz auf Basis pflanzlicher Fettsäuren

## Ansprüche

1. Holzschutzmittel auf der Grundlage eines organischen Lösungsmittels und eines Alkydharzes, <u>dadurch</u> <u>gekennzeichnet</u>, daß es eine quartäre Ammoniumverbindung und ein Eisensalz enthält.

2. Holzschutzmittel gemäß Anspruch 1, enthaltend ein Eisensalz zusammen mit einem Mangan-, Blei-oder Zirkoniumsalz.

3. Verfahren zum Schutz von Holz gegen Zerstörung durch Pilze, <u>dadurch</u> <u>gekennzeichnet</u>, daß man das Holz mit einem Holzschutzmittel gemäß Anspruch 1 behandelt.

**Europäisches Patentamt**

**EUROPÄISCHER RECHERCHENBERICHT**

Nummer der Anmeldung

EP 87 10 9054

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,A | SEIFEN-ÖLE-FETTE-WACHSE, Band 109, Nr. 20, 9. Dezember 1983, Seiten 603-606, Augsburg, DE; H. BECKER: "Neue Holzschutzmittel-Gruppe: Alkylammoniumverbindungen" * Insgesamt * | 1,3 | B 27 K 3/50 B 27 K 3/52 |
| D,A | H. ROMPP: "Chemie Lexikon", 5. Auflage, Seiten 4652-4653, Frankh'sche Verlagshandlung, Stuttgart, DE; Stichwort "Sikkative" * Insgesamt * | 1-3 | |
| A | DE-A-2 454 531 (RHONE-PROGIL) * Seite 2, Zeile 26 - Seite 3, Zeile 21; Seite 4, zeilen 1-26 * | 1-3 | |
| A | US-A-4 360 385 (J.F. GRUNEWALDER) * Spalte 3, Zeile 56 - Spalte 6, Zeile 2 * | 1-3 | RECHERCHIERTE SACHGEBIETE (Int. Cl.4) B 27 K |
| A | US-A-2 772 262 (C.C. YEAGER et al.) * Spalte 1, Zeile 15 - Spalte 2, Zeile 60; Spalte 4, Zeile 36 - Spalte 5, Zeile 42 * | 1-3 | |

Der vorliegende Recherchenbericht wurde für alle Patentansprüche erstellt.

| Recherchenort | Abschlußdatum der Recherche | Prüfer |
|---|---|---|
| DEN HAAG | 16-10-1987 | FLETCHER A.S. |